# EUROPÄISCHE PATENTSCHRIFT

(11) **EP 0 859 421 B1**
(45) Veröffentlichungstag und Bekanntmachung des Hinweises auf die Patenterteilung: **02.10.2002**
(21) Anmeldenummer: 97121291.5
(22) Anmeldetag: 04.12.1997
(51) Int. Cl.: H01M 8/04, H01M 8/06

(54) **Flüssigbrennstoffzellensystem**
Fuel cell system with liquid fuel
Système de piles à combustible liquide

(30) Priorität: 17.01.1997 DE 19701560
(43) Veröffentlichungstag der Anmeldung: 19.08.1998
(73) Patentinhaber: Ballard Power Systems AG, 73230 Kirchheim / Teck-Nabern (DE)
(72) Erfinder: Hornburg, Gerald, 89275 Elchingen (DE); Lamm, Arnold Dr., 89275 Elchingen, Thalfingen (DE); Urban, Peter Dr., 89081 Ulm (DE)

(56) Entgegenhaltungen:
- DE-A- 3 508 153
- GB-A- 1 263 544
- US-A- 5 573 866
- PATENT ABSTRACTS OF JAPAN vol. 016, no. 579 (E-1299), 18.Dezember 1992 -& JP 04 229957 A (AISIN AW CO LTD), 19.August 1992,
- PATENT ABSTRACTS OF JAPAN vol. 007, no. 094 (E-171), 20.April 1983 -& JP 58 016471 A (NISSAN JIDOSHA KK), 31.Januar 1983,
- PATENT ABSTRACTS OF JAPAN vol. 007, no. 045 (E-160), 23.Februar 1983 -& JP 57 196479 A (NISSAN JIDOSHA KK), 2.Dezember 1982,
- PATENT ABSTRACTS OF JAPAN vol. 005, no. 171 (E-080), 30.Oktober 1981 -& JP 56 097972 A (HITACHI LTD), 7.August 1981,
- PATENT ABSTRACTS OF JAPAN vol. 006, no. 081 (E-107), 19.Mai 1982 -& JP 57 019973 A (HITACHI LTD), 2.Februar 1982,
- PATENT ABSTRACTS OF JAPAN vol. 005, no. 197 (E-086), 15.Dezember 1981 & JP 56 118274 A (NISSAN MOTOR CO LTD), 17.September 1981,
- PATENT ABSTRACTS OF JAPAN vol. 005, no. 197 (E-086), 15.Dezember 1981 & JP 56 118273 A (NISSAN MOTOR CO LTD), 17.September 1981,

## Beschreibung

Die Erfindung betrifft ein Brennstoffzellensystem mit einem Anodenraum und einem Kathodenraum, die durch eine protonenleitende Membran voneinander getrennt sind.

Zur Zeit ist zur Verstromung von flüssigen Energieträgern in einem Brennstoffzellensystem mit Protonenaustauschermembran (PEM-Brennstoffzelle) weltweit schwerpunktmäßig die Reformierung von Methanol in einem Gaserzeugungssystem vorgesehen. Dabei wird ein Wasser/Methanol-Gemisch verdampft und in einem Reformer zu Wasserstoff, Kohlendioxid und Kohlenmonoxid umgesetzt. Verdampfung und Reformierung sind hinsichtlich des energetischen Umsatzes sehr aufwendig. Dies hat Wirkungsgradverluste für das Gesamtsystem zur Folge. Darüber hinaus sind Gasaufbereitungsschritte zur Reinigung des Reformierungsgases notwendig. Das gereinigte Gas wird dann dem PEM-Brennstoffzellensystem zugeführt.

Ein weiteres Problem stellt der Wassereinsatz für die Reformierung dar. Das auf der Kathodenseite anfallende Produktwasser reicht zur Deckung des Wasserhaushaltes nicht aus. Hierdurch wird ein separater Wassertank notwendig.

Weiterhin ist aus der US 48 28 941 A1 eine Methanol/Luft-Brennstoffzelle mit einer CO₂-permeablen, anionenleitenden Membran bekannt.

Aus der WO 96/12317 A1 ist schließlich ein gattungsgemäßes Brennstoffzellensystem bekannt, bei dem einem Anodenraum ein flüssiges Methanol/Wassergemisch zugeführt wird. Weiterhin ist eine Leitung zur Rezirkulation des Methanol/Wassergemisches vorgesehen. In dieser Leitung ist außerdem ein Gasabscheider zur Abtrennung von im Anodenraum gebildeten CO₂ vorgesehen. Mit dem CO₂ wird jedoch gleichzeitig auch Methanoldampf abgetrennt, was zu einer Wirkungsgradverringerung führt.

Es ist die Aufgabe der Erfindung, ein einfach aufgebautes, kompaktes und mit einem flüssigen Brennmittel/Kühlmittelgemisch betriebenes Brennstoffzellensystem mit protonenleitender Membran mit verbessertem Gesamtwirkungsgrad zu schaffen.

Die Aufgabe wird erfindungsgemäß durch die kennzeichnenden Merkmale des Patentanspruchs 1 gelöst.

Die Rückführung des gasfreien, heißen Anodenstromes liefert eine ausreichend hohe Brennstoffzelleneingangstemperatur, wodurch der Gesamtwirkungsgrad der Brennstoffzelle steigt.

Der im ersten Gasabscheider abgetrennte Dampf wird dem heißen Flüssigkeits/Gas-Gemisch vor dem Kühler wieder zugeführt. Erst nach erfolgter Kühlung wird das Gas in einem zweiten Gasabscheider abgetrennt und dem Kathodenabgas zugeführt. Die Gasabscheidung am kühlsten Punkt des Systems führt zu einem geringen Brennmittelaustrag über das inerte Kohlendioxidgas. Die ausgetragenen Brennmittelanteile werden mit dem sauerstoffreichen Kathodenabgas gemischt und in einem Abgaskatalystaor zu Kohlendioxid und Wasserdampf umgesetzt. Dadurch kann der Wirkungsgradverlust wesentlich verringert werden, da ein Teil der thermischen Energie im Abgas durch einen Expander zurückgewonnen und auf einen Kompressor zur Verdichtung des sauerstoffhaltigen Gases übertragen wird.

Das Gesamtsystem weist eine positive Wasserbilanz auf, da ein großer Teil des Wasserdampfes vor und nach dem als Kondensationsturbine wirkenden Expander auskondensiert und das so zurückgewonne Wasser einem Sammel- beziehungsweise Ausgleichsbehälter zugeführt wird.

Weitere Vorteile und Ausgestaltungen gehen aus den Unteransprüchen und der Beschreibung hervor. Die Erfindung ist nachstehend anhand einer Zeichnung, die den Prinzipaufbau des Brennstoffzellensystems zeigt, näher beschrieben.

Die Brennstoffzelle 1 besteht aus einem Anodenraum 2 und einem Kathodenraum 3,die durch eine protonenleitende Membran 4 voneinander getrennt sind. Über eine Anodenzuleitung 5 wird dem Anodenraum 2 ein flüssiges Brennmittel/Kühlmittelgemisch zugeführt. Als Brennmittel kann hierbei jede bei Zimmertemperatur flüssige und elektrochemisch oxidierbare Substanz mit der allgemeinen Strukturformel H-[-CH₂O-]ₙ-Y mit 1≤n≤5 und Y=H oder Y=CH₃ verwendet werden. Das im Ausführungsbeispiel beschriebene System wird mit flüssigem Methanol als Brennmittel und Wasser als Kühlmittel betrieben. Obwohl im folgenden nur noch die Verwendung eines Methanol/Wassergemisches beschrieben wird, soll der Schutzbreich dieser Anmeldung jedoch nicht auf dieses Ausführungsbeispiel beschränkt werden. Als Kühlmittel kommen insbesondere auch Flüssigkeiten oder ionische beziehungsweise nicht-ionische Zusätze zum Wasser mit guten Frostschutzeigenschaften in Frage.

In den Kathodenraum 3 wird über eine Kathodenzuleitung 6 ein sauerstoffhaltiges Gas geleitet. Gemäß Ausführungsbeispiel wird hierzu Umgebungsluft verwendet. In der Brennstoffzelle 1 wird das Brennmittel an der Anode oxidiert, der Luftsauerstoff an der Kathode reduziert. Hierzu wird die protonenleitende Membran 4 auf den entsprechenden Oberflächen mit geeigneten Katalysatoren, wie zum Beispiel hochoberflächige Edelmatallmohre oder getragene Katalysatoren beschichtet. Von der Anodenseite können nun Protonen durch die protonenleitende Membran 4 wandern und sich an der Kathodenseite mit den Sauerstoffionen zu Wasser verbinden. Bei dieser elektrochemischen Reaktion entsteht zwischen den beiden Elektroden eine Spannung. Durch Parallelbeziehungsweise Hintereinanderschaltung vieler solcher Zellen zu einem sogenannten Brennstoffzellenstapel können Spannungen und Stromstärken erreicht werden, die zum Antrieb eines Fahrzeugs ausreichen.

Als Produkt entsteht am Anodenausgang ein mit Wasser und Methanol angereichertes Kohlendioxidgas. Dieses Flüssigkeits/Gasgemisch wird über eine Rückführleitung 7 , die mit der Anodenzuleitung 5 verbunden ist, aus dem Anodenraum 2 abgeführt. Die Restsauerstoff und Wasserdampf enthaltende Kathodenabluft wird über eine Kathodenabgasleitung 8 abgeführt. Um einen guten Wirkungsgrad zu erhalten wird die Umgebungsluft im Kathodenraum 3 mit Überdruck bereitgestellt. Hierzu ist in der Kathodenzuleitung 6 ein mit Hilfe eines Elektromotors 9 angetriebener Kompressor 10 angeordnet, der den gewünschten Luftmassenstrom ansaugt und auf das erforderliche Druckniveau verdichtet. Beim Betrieb mit Umgebungsluft wird außerdem vorzugsweise im Eintrittsbereich der Kathodenzuleitung 6 stromauf des Kompressors 10 ein Luftfilter 11 vorgesehen. Ein Teil der für die Komprimierung der Umgebungsluft benötigten Energie kann mit Hilfe eines in der Kathodenabgasleitung 8 angeordneten Expanders 12 zurückgewonnen werden. Vorzugsweise sind der Kompressor 9, der Expander 12 und der Elektromotor 9 auf einer gemeinsamen Welle angeordnet. Die Regelung der Brennstoffzellenleistung erfolgt durch Steuerung oder Regelung der Kompressordrehzahl und damit des zur Verfügung stehenden Luftmassenstromes.

Auf der Anodenseite wird das Methanol/Wassergemisch mit Hilfe einer Pumpe 13 bei einem vorgegebenem Druck zirkuliert, um an der Anode ständig ein Überangebot an Brennmittel zu gewährleisten. Das Verhältnis von Wasser zu Methanol in der Anodenzuleitung 5 wird mit Hilfe eines Sensors 14 eingestellt, der die Methanolkonzentration in der Anodenzuleitung 5 mißt. In Abhängigkeit von diesem Sensorsignal erfolgt dann eine Konzentrationsregelung für das Methanol/Wassergemisch, wobei das flüssige Methanol aus einem Methanoltank 15 über eine Methanolzuführungsleitung 16 zugeführt und mit Hilfe einer nicht näher gezeigten Einspritzdüse 19 in die Anodenzuleitung 5 eingespritzt wird. Der Einspritzdruck wird durch eine in der Methanolzuführungsleitung 16 angeordneten Einspritzpumpe 17 erzeugt. Dem Anodenraum 2 wird somit ständig ein Methanol/Wassergemisch mit konstanter Methanolkonzentration zugeführt.

Auf der Anodenseite tritt nun das Problem auf, daß aus dem Flüssigkeits/Gasgemisch in der Rückführleitung 7 das mit Methanol- und Wasserdampf angereicherte Kohlendioxid abgetrennt werden muß. Dabei soll ein zu hoher Methanolaustrag über das Kohlendioxidgas verhindert werden, da sonst der Gesamtwirkungsgrad des Systems verringert wird und gleichzeitig unverbranntes Methanol an die Umgebung abgegeben würde. Um dies zu verhindern wird ein zweistufiges System zur Gasabtrennung vorgesehen. Ein erster Gasabscheider 18 zur Abtrennung von Dampf aus dem heißen Flüssigkeits/Gasgemisch ist in der Rückführleitung 7 angeordnet. Die heiße Flüssigkeit wird anschließend von der Rückführleitung 7 in die Anodenzuleitung 5 geführt, während der Dampf mit Hilfe einer Leitung 33 über einen Kühler 20 einem zweiten Gasabscheider 21 zugeführt wird. Das Gas wird somit erst nach erfolgter Kühlung im zweiten Gasabscheider 21, das heißt am kältesten Punkt des Systems, abgetrennt, wodurch der Methanolaustrag über das Kohlendioxid erheblich reduziert wird.

Das im zweiten Gasabscheider 21 verbleibende Methanol/Wassergemisch wird über eine Leitung 22 in die Anodenzuleitung 5 zurückgeführt. Die Rückführung des heißen Methanol/Wassergemisches aus der Rückführleitung 7 und des heruntergekühlten Methanol/Wassergemisches aus der Leitung 22 erfolgt über ein Thermostatventil 23. Mit Hilfe dieses Thermostatventils 23 kann somit die Eingangstemperatur am Anodenraum 2 auf einen vorgegebenen Wert geregelt werden. Die Rückführung des heißen, gasfreien Methanol/Wassergemisches liefert eine ausreichend hohe Brennstoffzellentemperatur am Anodeneintritt, wodurch der Gesamtwirkungsgrad des Brennstoffzellensystems erhöht wird.

Durch eine Bypassleitung 24, die die Rückführleitung 7 stromauf des ersten Gasabscheiders 18 mit der Leitung 33 verbindet, und eines darin angeordneten Dosierventils 25 kann ein Teil des heißen Flüssigkeits/Gasgemisches aus der Rückführleitung 7 abgetrennt und direkt dem Kühler 20 zugeführt werden. Der im ersten Gasabscheider 18 abgetrennte Dampf wird dann gegebenenfalls über ein weiteres Dosierventil 26 dem Flüssigkeits/Gasgemsich stromauf des Kühlers 20 zugeführt. Durch diese Dosierventile können die Massenströme und damit die Temperaturniveaus in den einzelnen Zweigen des Anodenkreislaufes gezielt beeinflußt werden, wodurch variable Steuer- oder Regelverfahren realisiert werden können.

Weiterhin können weitere Bypassleitungen 27, 28 mit integrierten Dosierventilen 29,30 und Wärmetauschern 31, 32 vorgesehen werden, mit deren Hilfe bei Bedarf Wärmeenergie von der heißen Kathodenabluft in der Kathodenabgasleitung 8 auf das heruntergekühlte Methanol/Wassergemisch in der Leitung 22 beziehungsweise vom heißen Methanol/Wassergemisch in der Anodenzuleitung 5 auf die kühleren Luftmassenstrom in der Kathodenzuleitung 6 übertragen werden kann. Die Wärmetauscher 31, 32 sind hierzu vorzugsweise in der Kathodenabgasleitung 8 zwischen Kathodenraum 3 und Expander 12 beziehungsweise in der Kathodenzuleitung 6 zwischen Kompressor 10 und Kathodenraum 3 angeordnet. Zur Regelung des Dosierventils 29 kann weiterhin ein Temperatursensor 35 stromab des Wärmetauschers 31 in der Kathodenabgasleitung 8 vorgesehen werden. Mit Hilfe des Wärmetauschers 32 wird die heiße, aufgeladene Luft vor dem Eintritt in den Kathodenraum 3 vorzugsweise auf eine Temperatur von bis zu 100° C abgekühlt.

Das im zweiten Gasabscheider 21 abgetrennte Gasgemisch aus Restmethanol und Kohlendioxid wird über eine Leitung 33 in die Kathodenabgasleitung 8 geführt, wo sie mit der sauerstoffreichen Kathodenabluft vermischt und in einem in der Kathodenabgasleitung 8 stromab der Einmündung der Leitung 33 angeordneten Abgaskatalysator 34 zu Kohlendioxid und Wasserdampf umgesetzt. Um zumindest einen Teil des Wasserdampfes als Wasser aus der Kathodenabluft abzutrennen sind stromauf und stromab des Expanders 12 zwei Wasserabscheider 36, 37 in der Kathodenabgasleitung 8 angeordnet. Hierbei dient der Expander 12 als kompakte Kondensationsturbine, an deren Ausgang wiederum ein Teil des Wasserdampfes auskondensiert. Zusätzlich wird die Kathodenabluft im Anschluß an den Abgaskatalysator 34 mit Hilfe des weiter oben beschriebenen Wärmetauschers 31 und des Temperatursensors 35 auf ein vorgegebenes Temperaturniveau heruntergekühlt. Erst durch diese Kombination von Temperaturregelung und Kondensationsturbine kann ein positiver Wasserhaushalt des Gesamtsystems gewährleistet werden. Das in den Wasserabscheidern 36, 37 gesammelte Wasser wird anschließend über eine Rückspeiseleitung 38 mit integrierter Rückspeisepumpe 39 in den-zweiten Gasabscheider 21 zurückgeführt. Dieser zweite Gasabscheider ist gleichzeitig als Sammelbehälter für das auf der Kathodenseite anfallende Produktwasser und als Ausgleichsbehälter für das flüssige Methanol/Wassergemisch ausgebildet. Über eine Füllstandsregelung kann das Niveau des Sammelbehälters kontrolliert und geregelt werden.

Dieses Gesamtsystem weist gegenüber herkömmlichen PEM-Brennstoffzellensystemen bei kompakterer Bauweise und geringeren Kosten einen vergleichbaren Systemwirkungsgard auf. Insbesondere durch die Vereinigung von Kühl- und Brennmittelkreislauf folgt eine Volumen- und Kostenreduzierung. Außerdem wird der Gesamtwirkungsgrad erhöht, da keine Energie für die Verdampfung, Überhitzung und Treibstofferzeugung aufgewendet werden muß und die Wirkungsgradverluste durch die Gasaufbereitung im Abgaskatalysator wesentlich verringert werden. Weiterhin kann auf eine Luftbefeuchtung verzichtet werden. Weitere Vorteile sind in der positiven Wasserbilanz und einem verbessertem Kaltstartverhalten zu sehen. Schließlich kann durch die Verwendung eines Methanol/Wassergemisches auf Frostschutzmaßnahmen verzichtet werden.

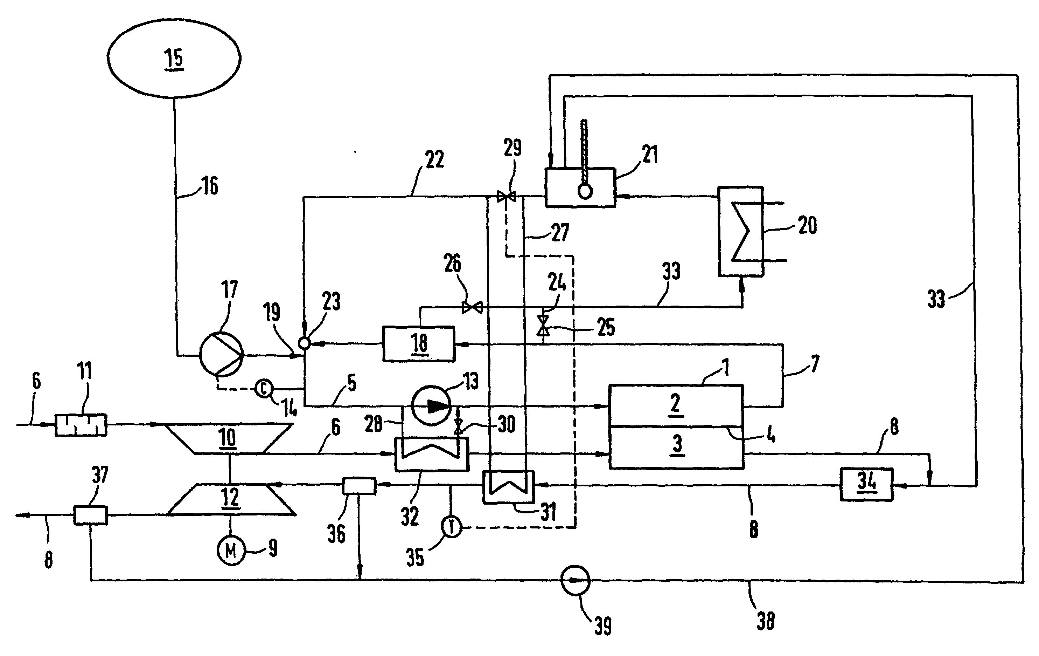

## Patentansprüche

1. Brennstoffzellensystem (1) mit einem Anodenraum (2) und einem Kathodenraum (3), die durch eine protonenleitende Membran (4) voneinander getrennt sind, mit einer Kathodenzuleitung (6) zur Zufuhr von sauerstoffhaltigem Gas zum Kathodenraum (3), einer Anodenzuleitung (5) zur Zufuhr eines flüssigen Brennmittel/Kühlmittelgemisches zum Anodenraum (2), mit einer Rückführleitung (7) zwischen dem Anodenraumausgang und der Anodenzuleitung (5), wobei in der Rückführleitung (7) ein erster Gasabscheider (18) mit zugehöriger Leitung (33) zur Abfuhr des abgetrennten Gases angeordnet ist, und mit einer Kathodenabgasleitung (8),
**dadurch gekennzeichnet,**
**daß** in der Leitung (33) in Strömungsrichtung nacheinander ein Kühler (20) und ein zweiter Gasabscheider (21) angeordnet sind, daß eine steuerbare Bypassleitung (24), die die Rückführleitung (7) stromauf des ersten Gasabscheiders (18) mit der Leitung (33) zwischen dem ersten Gasabscheider (18) und dem Kühler (20) verbindet, vorgesehen ist und daß der zweite Gasabscheider (21) zur Abfuhr der flüssigen Bestandteile über eine Leitung (22) mit der Anodenzuleitung (5) verbunden ist.

2. Brennstoffzellensystem nach Anspruch 1,
**dadurch gekennzeichnet,**
**daß** in der Kathodenabgasleitung (8) ein Abgaskatalysator (34) angeordnet ist und daß die Leitung (33) stromauf des Abgaskatalysators (34) in die Kathodenabgasleitung (8) mündet.

3. Brennstoffzellensystem nach Anspruch 2,
**dadurch gekennzeichnet,**
**daß** in den zweiten Gasabscheider (21) ein Sammelbehälter und/oder ein Ausgleichsbehälter mit Niveauregulierung integriert ist.

4. Brennstoffzellensystem nach Anspruch 2,
**dadurch gekennzeichnet,**
**daß** die Rückführleitung (7) und die Leitung (22) über ein Thermostatventil (23) mit der Anodenzuleitung (5) verbunden sind.

5. Brennstoffzellensystem nach Anspruch 1,
**dadurch gekennzeichnet,**
**daß** zur Zufuhr des flüssigen Brennmittels eine Brennmittelzuführungsleitung (16) zwischen einem Brennmitteltank (15) und der Anodenzuleitung (5) vorgesehen ist, daß in der Anodenzuleitung (5) stromab der Einmündung der Brennmittelzuführungsleitung (16) ein Sensor (14) zur Ermittlung der Brennmittelkonzentration vorgesehen ist, und daß in der Brennmittelzuführungsleitung (16) eine Einspritzpumpe (17) und eine Einspritzdüse (19) für die Einspritzung des Brennmittels in Abhängigkeit von der Brennmittelkonzentration stromauf des Sensors (14) in die Anodenzuleitung (5) vorgesehen sind.

6. Brennstoffzellensystem nach Anspruch 1,
**dadurch gekennzeichnet,**
**daß** zwischen der Kathodenzuleitung (6) und der Kathodenabgasleitung (8) eine Kompressor/Expandereinheit (10, 12) vorgesehen ist.

7. Brennstoffzellensystem nach Anspruch 1, 3 und 6,
**dadurch gekennzeichnet,**
**daß** stromauf und/oder stromab der Kompressor/Expandereinheit (10, 12) in der Kathodenabgasleitung (8) ein Wasserabscheider (36, 37) vorgesehen ist, der über eine Rückspeiseleitung (38) mit dem Sammelbehälter verbunden ist.

8. Brennstoffzellensystem nach Anspruch 1,
**dadurch gekennzeichnet,**
**daß** zwischen der Anodenzuleitung (6) und der Kathodenzuleitung (6) ein Wärmetauscher (32) vorgesehen ist.

9. Brennstoffzellensystem nach Anspruch 1,
**dadurch gekennzeichnet,**
**daß** zwischen der Leitung (22) und der Kathodenabgasleitung (8) ein Wärmetauscher (31) vorgesehen ist.

10. Brennstoffzellensystem nach Anspruch 9,
**dadurch gekennzeichnet,**
**daß** in der Leitung (22) ein Dosierventil (29) angeordnet ist, daß in der Kathodenabgasleitung (8) stromab des Wärmetauschers (31) ein Temperatursensor (35) angeordnet ist, daß eine das Dosierventil (29) umgehende und den Wärmetauscher (31) durchströmende Bypassleitung (27) vorgesehen ist, wobei das Dosierventil (29) zur Einstellung des Bypassstromes in Abhängigkeit vom Signal des Temperatursensors (35) angesteuert wird.

## Claims

1. Fuel cell system (1) with an anode space (2) and a cathode space (3) separated from one another by a proton-conducting membrane, having a cathode supply line (6) for the supply of oxygen-containing gas to the cathode space (3), an anode supply line (5) for the supply of a liquid fuel/coolant mixture to the anode space (2), and a return line (7) between the outlet of the anode space and the anode supply line (5), such that a first gas precipitator (18) with an associated line (33) to lead away the separated gas is arranged in the said return line (7), and having a cathode exhaust gas line (8),
**characterised in that**
in the line (33) a cooler (20) and a second gas precipitator (21) are arranged one after the other in the flow direction, a controllable bypass line (24) is provided which, at a point upstream from the first gas precipitator (18), connects the return line (7) with the line (33) between the first gas precipitator (18) and the cooler (20), and the second gas precipitator (21) is connected with the anode supply line (5) via a line (22) to lead away the liquid constituents.

2. Fuel cell system according to Claim 1,
**characterised in that**
an exhaust gas catalyser (34) is arranged in the cathode exhaust line (8) and the line (33) opens into the cathode exhaust line (8) at a point upstream from the exhaust gas catalyser (34).

3. Fuel cell system according to Claim 2,
**characterised in that**
a collecting container and/or a topping-up container with filling level regulation is integrated in the second gas precipitator (21).

4. Fuel cell system according to Claim 2,
**characterised in that**
the return line (7) and the line (22) are connected to the anode supply line (5) via a thermostat valve (23).

5. Fuel cell system according to Claim 1,
**characterised in that**
for the supply of the liquid fuel a fuel supply line (16) is provided between a fuel tank (15) and the anode supply line (5), a sensor (14) is provided in the anode supply line (5) at a point downstream from the connection point of the fuel supply line (16) to determine the fuel concentration, and an injection pump (17) and an injection nozzle (19) are provided in the fuel supply line (16) for injecting the fuel into the anode supply line (5) as a function of the fuel concentration upstream from the sensor (14).

6. Fuel cell system according to Claim 1,
**characterised in that**
a compressor/expander unit (10, 12) is provided between the cathode supply line (6) and the cathode exhaust line (8).

7. Fuel cell system according to Claims 1, 3 and 6,
**characterised in that**
a water precipitator (36, 37) is provided upstream and/or downstream from the compressor/expander unit (10, 12), which is connected with the collecting container via a return feed line (38).

8. Fuel cell system according to Claim 1,
**characterised in that**
a heat exchanger (32) is provided between the anode supply line (6) and the cathode supply line (6).

9. Fuel cell system according to Claim 1,
**characterised in that**
a heat exchanger (31) is provided between the line (22) and the cathode exhaust line (8).

10. Fuel cell system according to Claim 9,
**characterised in that**
a metering valve (29) is arranged in the line (22), a temperature sensor (35) is arranged in the cathode exhaust line (8) at a point downstream from the heat exchanger (31), a bypass line (27) that bypasses the metering valve (29) and flows through the heat exchanger (31) is provided, and the metering valve (29) is actuated to adjust the bypass flow as a function of the signal from the temperature sensor (35).

## Revendications

1. Système de pile à combustible (1) comportant un espace anodique (2) et un espace cathodique (3), qui sont séparés l'un de l'autre par une membrane (4) conductrice pour les protons, une canalisation d'arrivée (6) aboutissant à la cathode et servant à amener un gaz contenant de l'oxygène à l'espace cathodique (3), une canalisation d'arrivée (5) aboutissant à l'anode et servant à amener un mélange milieu combustible / milieu de refroidissement liquide à l'espace anodique (2), contenant une canalisation de retour (7) située entre la sortie de l'espace anodique et la canalisation d'arrivée (5) aboutissant à l'anode, canalisation de retour (7) dans laquelle est disposé un premier séparateur de gaz (18) comportant une canalisation associée (33) pour évacuer le gaz séparé, et une canalisation d'évacuation de gaz (8) partant de la cathode,
**caractérisé en ce que** dans la canalisation (33) sont disposés successivement, dans la direction d'écoulement, un radiateur (20) et un second séparateur de gaz (21), qu'il est prévu une canalisation de by-pass commandable (24), qui relie la canalisation de retour (7) en amont du premier séparateur de gaz (18) à la canalisation (33) située entre le premier séparateur de gaz (18) et le radiateur (20), et que le second séparateur de gaz (21) est relié pour l'évacuation des constituants liquides par l'intermédiaire d'une canalisation (22) à la canalisation d'arrivée (5) aboutissant à l'anode.

2. Système de pile à combustible selon la revendication 1, **caractérisé en ce qu'**un catalyseur de gaz d'échappement (34) est disposé dans la canalisation d'évacuation de gaz (8) partant de la cathode et que la canalisation (33) débouche, en amont du catalyseur de gaz d'échappement (34), dans la canalisation des gaz d'échappement (8) sortant de la cathode.

3. Système de pile à combustible selon la revendication 2, **caractérisé en ce qu'**un récipient de collecte et/ou un récipient de compensation avec régulation de niveau sont intégrés dans le second séparateur de gaz (21).

4. Système de pile à combustible selon la revendication 2, **caractérisé en ce que** la canalisation de retour (7) et la canalisation (22) sont reliées à la canalisation d'arrivée (5) aboutissant à l'anode, par l'intermédiaire d'une soupape thermostatique (23).

5. Système de pile à combustible selon la revendication 1, **caractérisé en ce que** pour l'envoi du milieu combustible liquide il est prévu une canalisation (16) d'amenée du milieu combustible disposée entre un réservoir (15) du milieu combustible et la canalisation d'arrivée (5) aboutissant à l'anode, qu'un capteur (14) servant à déterminer la concentration du milieu combustible est prévu dans la canalisation d'arrivée (5) aboutissant à l'anode, en aval de l'embouchure de la canalisation (16) d'amenée du combustible et qu'une pompe d'injection (17) et une buse d'injection (19) servant à injecter le milieu combustible en fonction de la concentration du milieu combustible en amont du capteur (14), dans la canalisation d'arrivée (5) aboutissant à l'anode, sont prévues dans la canalisation (16) d'amenée du combustible.

6. Système de pile à combustible selon la revendication 1, **caractérisé en ce qu'**une unité formant compresseur / détendeur (10, 12) est prévu entre la canalisation d'arrivée (6) aboutissant à la cathode et la canalisation des gaz d'échappement (8) partant de la cathode.

7. Système de pile à combustible selon les revendications 1, 3 et 6, **caractérisé en ce que** dans la canalisation d'échappement (8) partant de la cathode est prévu, en amont et/ou en aval de l'unité formant compresseur/détendeur (10, 12),un séparateur (36, 37), qui est relié au récipient de collecte par l'intermédiaire d'une canalisation de retour (38).

8. Système de pile à combustible selon la revendication 1, **caractérisé en ce qu'**un échangeur de chaleur (32) est prévu entre la canalisation d'arrivée (6) aboutissant à l'anode et la canalisation d'arrivée (6) aboutissant à la cathode.

9. Système de pile à combustible selon la revendication 1, **caractérisé en ce qu'**un échangeur de chaleur (31) est prévu entre la canalisation (22) et la canalisation des gaz d'échappement (8) partant de la cathode.

10. Système de pile à combustible selon la revendication 9, **caractérisé en ce qu'**une soupape de blocage (29) est disposée dans la canalisation (22), qu'un capteur de température (35) est distribué dans la canalisation de gaz d'échappement (8) sortant de la cathode, en aval de l'échangeur de chaleur (31), qu'il est prévu une canalisation de by-pass (27), qui contourne la soupape de dosage (29) et traverse l'échangeur de chaleur (31), la soupape de dosage (29) étant commandée pour le réglage du courant de by-pass en fonction du signal du capteur de température (35).
